# EUROPEAN PATENT APPLICATION

(11) **EP 4 651 573 A1**
(43) Date of publication of application: **19.11.2025**
(21) Application number: 24382517.1
(22) Date of filing: 13.05.2024
(51) Int. Cl.: H04W 52/02, H04W 88/10, H04W 84/12

(54) **WIRELESS ACCESS POINT**

(71) Applicant: Vodafone Group Services Limited, Newbury RG14 2FN (GB)
(72) Inventor: TEE, Wei Yang, London, W2 6BY (GB); SUEN, Ka Hei, London, W2 6BY (GB); GONZÁLEZ-GALLEGO RUIZ DEL MORAL, Sergio, London, W2 6BY (GB)
(74) Representative: Boult Wade Tennant LLP

(57) **Abstract**

Access points and methods of operating access points for a wireless local area network. The access point includes a multi-band radio assembly configured to operate in a first frequency band and a second frequency band and a controller configured to switch operation of the radio assembly between a first operating mode and a second operating mode. When operated in the first operating mode, the radio assembly operates in both the first frequency band and the second frequency band. When operated in the second operating mode, the radio assembly operates in the first frequency band and disables operation of the radio assembly in the second frequency band. The controller monitors wireless network traffic transmitted and received by the access point switches the operation of the radio assembly between the first operating mode and the second operating mode in dependence on the monitored wireless network traffic.

## Description

### TECHNICAL FIELD

The present disclosure relates to an access point for a wireless local area network, a network system comprising a plurality of access points for a wireless local area network, a controller for an access point for a wireless local area network and methods of operating an access point for a wireless local area network.

### BACKGROUND

Wireless Local Area Networks (WLANs) have become an integral part of the modern communication infrastructure, offering the convenience of mobility and the efficiency of high-speed networking without the constraints of wired connections. At the heart of this technology are Access Points (APs), which serve as the critical interface between wireless devices and the wired network infrastructure.

An access point acts as a transmitter and receiver of wireless signals, enabling devices to connect to a local area network (LAN) without physical cables. Initially, WLANs were primarily used in environments where wiring was difficult or impractical. However, with advancements in technology, their usage has expanded dramatically, covering various settings such as offices, homes, and public places like coffee shops and airports, providing Internet access and network connectivity to mobile and stationary devices alike.

The evolution of access points has closely followed the development of the IEEE 802.11 standards, which define the protocols for implementing WLAN communication. Beginning with the original 802.11 standard, introduced in the late 1990s, access points have evolved through several generations, incorporating advances in speed, range, and security. These include the widely adopted 802.11b, 802.11g, 802.11n, and more recently, 802.11ac and 802.11ax standards, each offering improvements over its predecessors in terms of data transmission rates and network efficiency. Today, access points incorporate a variety of features designed to enhance user experience and network management, including multiple-input multiple-output (MIMO) technology, beamforming, and support for multiple frequency bands (dual-band or tri-band operation). They also often include sophisticated software to manage network performance, security protocols to protect data, and the ability to connect multiple access points in a seamless network to cover larger areas. Thus, access points play a pivotal role in the functionality and spread of wireless networks, enabling the continual growth of digital communication and internet accessibility in an increasingly connected world.

It is in this context the present disclosure has been devised.

### BRIEF SUMMARY

It has been realised that power consumption of an access point for a wireless local area network can be reduced by operating the access point in an operating mode in which operation in one or more frequency bands is disabled. Furthermore it has been realised that power consumption can be reduced whilst adapting to performance requirements of the access point by switching between operation modes of the radio assembly in dependence on monitored wireless network traffic which is transmitted and received over the access point.

According to a first aspect of the present disclosure there is provided an access point for a wireless local area network. The access point comprises: a multi-band radio assembly configured to operate in a first frequency band and a second frequency band; and a controller configured to switch operation of the radio assembly between a first operating mode and a second operating mode. When the radio assembly is operated in the first operating mode, the radio assembly is configured to operate in both the first frequency band and the second frequency band. When the radio assembly is operated in the second operating mode, the radio assembly is configured to operate in the first frequency band and to disable operation of the radio assembly in the second frequency band. The controller is configured to monitor wireless network traffic transmitted and received by the access point and to switch the operation of the radio assembly between the first operating mode and the second operating mode in the event that the monitored wireless network traffic crosses a traffic threshold.

The first operating mode may generally use more power than the second operating mode. The second operating mode may therefore comprise an energy-saving or economical mode of operation. The first operating mode may comprise a higher performance operating mode. For example, the first operating mode may provide faster network speeds and/or bandwidth than the second operating mode. The first operating mode may be suitable for times at which a relatively large number of devices are wirelessly connected to the wireless local area network and/or wireless data traffic is relatively high in the wireless local area network. The second operating mode may be suitable for times at which a relatively small number of devices are wirelessly connected to the wireless local area network and/or wireless data traffic is relatively low in the wireless local area network. The second operating mode may advantageously reduce energy consumption of the access point when the second operating mode can meet current network traffic requirements.

The second operating mode may be particularly beneficial during times at which there is relatively low user demand for wireless network traffic. For example, when users are situated away from the wireless local area network or are otherwise not actively using connected devices (e.g., when users are asleep) there may be relatively low user demand for wireless network traffic. However, it may still be beneficial to provide connectivity over the access point and without disabling the access point entirely. For example, one or more Internet of Things (IoT), connected home devices and/or connected sensor devices may require consistent wireless connectivity (e.g., at substantially all times). Whilst such devices may benefit from consistent wireless connectivity, they may use or require relatively low network traffic levels and/or speeds and may therefore remain operational in the second operating mode. During the second operating mode, such devices can maintain a satisfactory wireless connection over the access point, whilst the access point has reduced energy consumption.

When operating in the second operating mode, there may be a requirement may arise for increased wireless network traffic and/or connection speeds. For example, a device may seek to download a software update or a user may begin streaming a video or music for which increased network traffic and/or connection speeds are preferential. In such an instance, the monitored wireless network traffic may increase to cross a traffic threshold and accordingly the controller may switch from the second operating mode to the first operating mode. Higher network speeds and bandwidth may then be available in the first operating mode to meet the requirement for increased wireless network traffic and/or connection speeds.

When operating in the first operating mode, a requirement for wireless network traffic and/or connection speeds may decrease. For example, a download of a file such as a software update may complete and/or a user may stop streaming a video or music. In such an instance, the monitored wireless network traffic may decrease to cross a traffic threshold and accordingly the controller may switch from the first operating mode to the second operating mode. Energy consumption of the access point may then be reduced whilst still maintaining satisfactory wireless network connectivity for any connected devices.

As explained above, the operating mode of the radio assembly may be dynamically changed to adapt to usage of the wireless local area network. This allows overall energy consumption of the access point to be reduced without detriment to a user or device connection experience.

The controller may be configured to switch the operation of the radio assembly between the first operating mode and the second operating mode during time periods during which the second operating mode is available. For some time periods the access point may operate in a performance mode in which the radio assembly only operate in the first operating mode. For example, during peak times when it is anticipated that relatively large amounts of wireless network traffic will be required and/or relatively fast network speeds will be required, the access point may operate in a performance mode during which the radio assembly only operates in the first operating mode.

For other time periods the access point may allow switching of the radio assembly to the second operating mode. For example, for some time periods the access point may operate in an economical mode during which the controller is configured to switch operation of the radio assembly between a first operating mode and a second operating mode (e.g., based on the monitored wireless network traffic).

Time periods during which the access point operates in a performance mode and a time periods during which the access point operates in an economical mode may be determined according a pre-defined schedule. For example, a user may configure a schedule comprising times at which the access point operates in the performance mode and times at which the access point operates in the economical mode.

The first frequency band may comprise a 2.4 GHz frequency band as commonly used in Wireless Fidelity (WiFi) networks. The second frequency band may comprise a 5 GHZ frequency band as commonly using in WiFi networks. The first frequency band and/or the second frequency band may include a plurality of frequency channels.

The radio assembly may comprise a first radio transceiver configured to operate in the first frequency band and a second radio transceiver configured to operate in the second frequency band. In the first operating mode the radio assembly may be operated such that both the first transceiver and the second transceiver are enabled and active. That is, in the first operating mode, the first radio transceiver may operate (e.g., receive and/or transmit radio signals) in the first frequency band and the second radio transceiver may operate (e.g., receive and/or transmit radio signals) in the second frequency band. In the second operating mode, the first radio transceiver may operate (e.g., receive and/or transmit radio signals) in the first frequency band and the second radio transceiver is disabled such that it does not operate (e.g., receives and/or transmits radio signals) in the second frequency band. Alternatively, the second radio transceiver could operate in the first frequency band in the second operating mode. In the second operating mode no transceivers operate in the second frequency band. In general, when operating in the second operating mode, no transceivers in the radio assembly operate in the second frequency band such that no radio signals are transmitted or received in the second frequency band.

Disabling operation of the radio assembly in the second frequency band may comprise turning off (e.g., powering down) one or more components in the radio assembly which are associated with operation in the second frequency band. For example, the radio assembly may include one or more of a card, a chip, a transceiver, a radio chain and/or an antenna which is configured for operating in the second frequency band. Disabling operation of the radio assembly in the second frequency band may comprise turning off (e.g., powering down) one or more of a card, a chip, a transceiver, a radio chain and/or an antenna which is configured for operating in the second frequency band. Additionally or alternatively, disabling operation of the radio assembly in the second frequency band may comprise reducing energy consumption of one or more components configured for operating in the second frequency band. For example, an antenna power of one or more antennas configured for operating in the second frequency band may be reduced (e.g., reduced to substantially zero power) so as to disable operation of the radio assembly in the second frequency band.

The monitoring of wireless network traffic transmitted and received by the access point may comprise monitoring network traffic per unit of time. The monitoring may comprise monitoring network traffic transmitted and received in a sample time period. The sample time period may, for example, comprise a period of one or more seconds (e.g., 1 second, 2 seconds, 5 seconds etc.). The sample time period may, for example, comprise a period of up to about a minute. In some examples, the sample time period may comprise a time period of greater than a minute.

The monitoring of wireless network traffic transmitted and received by the access point may comprise monitoring an amount of data which is transmitted and received by the access point (e.g., per unit of time). An amount of data may be monitored, for example, as a number of data packets and/or a volume of data, which is transmitted and received by the access point (e.g., per unit of time). In some examples, the monitoring of wireless network traffic transmitted and received by the access point may comprise monitoring a number of data packets per second and/or a number of bits per second, kilobits per second, megabits per second, gigabits per second or any other suitable measure.

Switching the operation of the radio assembly between the first operating mode and the second operating mode may comprise switching the operation of the radio assembly from the first operating mode to the second operating mode or may comprise switching the operation of the radio assembly from the second operating mode to the first operating mode.

The monitored wireless network traffic crossing a traffic threshold may comprise the monitored wireless network traffic decreasing to below a traffic threshold or the monitored wireless network traffic increasing to above a traffic threshold.

The access point comprises a wireless access point. The access point may comprise a root access point, a repeater access point and/or a mesh extender. The access point may form part of a wireless router. The access point may be any suitable device which provides wireless connectivity to one or more devices which wirelessly connect to the access point.

The first frequency band and the second frequency band may broadcast the same wireless network name (which may, for example, comprise a service set identifier SSID). This allows devices to switch between connection over the first frequency band and the second frequency band. For example, when the operating mode is switched from the first operating mode to the second operating mode (and the second frequency band is disabled) a device which is connected over the second frequency band may seamlessly switch their connection to the first frequency band (which remains operational) since the first frequency band is operating using the same wireless network name (SSID) as the second frequency band over which the device had an established connection.

The controller may be configured to switch the operation of the radio assembly from the first operating mode to the second operating mode in the event that the monitored wireless network traffic decreases below a first traffic threshold.

The controller may be configured to switch the operation of the radio assembly from the second operating mode to the first operating mode in the event that the monitored wireless network traffic increases above a second traffic threshold.

The second traffic threshold may be greater than the first traffic threshold.

By setting the second traffic threshold (at which the radio assembly is switched from the second operating mode to the first operating mode) at a higher traffic level than the first traffic threshold (at which the radio assembly is switched from the first operating mode to the second operating mode), a hysteresis is introduced which prevents multiple switching events in a short space of time if the monitored wireless network traffic undergoes small fluctuates near to a traffic threshold.

Operating in the second frequency band may consume more power than operating in the first frequency band.

The first frequency band may comprise frequencies which are lower frequencies than frequencies in the second frequency band.

The first frequency band may comprise a first range of frequencies between a first minimum frequency and a first maximum frequency (the first minimum frequency and the first maximum frequency being the lower and upper limits of the first frequency band respectively. The second frequency band may comprise a second range of frequencies between a second minimum frequency and a second maximum frequency (the second minimum frequency and the second maximum frequency being the lower and upper limits of the second frequency band respectively). The first maximum frequency may be a lower frequency than the second minimum frequency. That is, all of the frequencies in the first frequency band may be lower than all of the frequencies in the second frequency band.

The first frequency band may correspond with a 2.4 GHz frequency band. The second frequency band may correspond with a 5 GHz frequency band.

The multi-band radio assembly may be further configured to operate in a third frequency band. When the radio assembly is operated in the first operating mode, the radio assembly may be configured to operate in the first frequency band, the second frequency band and the third frequency band. When the radio assembly is operated in the second operating mode, the radio assembly may be configured to operate in the first frequency band and to disable operation of the radio assembly in the second frequency band and the third frequency band.

Operating in the third frequency band may consume more energy than operating in the first frequency band. The third frequency band may comprise frequencies which are higher frequencies than frequencies in the first frequency band and/or which are higher frequencies in the second frequency band.

The third frequency band may comprise a third range of frequencies between a third minimum frequency and a third maximum frequency (the third minimum frequency and the third maximum frequency being the lower and upper limits of the third frequency band respectively). The third minimum frequency may be a higher frequency than the second maximum frequency (the highest frequency in the second frequency band). That is, all of the frequencies in the first frequency band and all of the frequencies in the second frequency band may be lower than all of the frequencies in the third frequency band.

The third frequency band may correspond with a 6 GHz frequency band.

The controller may be further configured to switch operation of the radio assembly between the first operating mode, the second operating mode and a third operating mode. When the radio assembly is operated in the first operating mode, the radio assembly may be configured to operate in the first frequency band, the second frequency band and the third frequency band. When the radio assembly is operated in the second operating mode, the radio assembly may be configured to operate in the first frequency band and to disable operation of the radio assembly in the second frequency band and the third frequency band. When the radio assembly is operated in the third operating mode, the radio assembly may be configured to operate in the first frequency band and the second frequency band and to disable operation of the radio assembly in the third frequency band.

The third operating mode may comprise an intermediate between the first operating mode and the second operating mode. The controller may be configured to switch the operation of the radio assembly between the first operating mode, the second operating mode and the third operating in the event that the monitored wireless network traffic crosses a traffic threshold. For example, if the access point is operating in the second operating mode, the operation may be switched to the third operating mode (in which the second frequency band becomes operational) in the event that the monitored wireless traffic increases above a first traffic threshold. The operation may then be switched to the first operating mode (in which all of the first, second and third operating modes are operational) if the monitored wireless traffic increases above a second traffic threshold (where the second traffic threshold is higher than the first traffic threshold).

When operating in the first operating mode, the operation may be switched to the third operating mode (in which the third frequency band is disabled) in the event that the monitored wireless traffic decreases below a third traffic threshold. The operation may then be switched to the second operation mode if the monitored wireless traffic decreases below a fourth traffic threshold (where the fourth traffic threshold is lower than the third traffic threshold).

The third operating mode may provide a performance (e.g., wireless network speeds and/or bandwidth) which is improved when compared to the second operating mode but which is not as good as the first operating mode (in which all of the first, second and third frequency bands are operational). The third operating mode may consume more power than the second operating mode but less power than the first operating mode.

The controller may be further configured to monitor the identity of devices which are wirelessly connected to the access point and to switch the operation of the radio assembly from the second operating mode to the first operating mode in the event that a device in a stored priority list of devices wirelessly connects to the access point.

The access point may store, maintain and/or have access to the priority list of devices. The priority list of devices may comprise devices for which higher network performance, traffic levels and/or speeds are desired. The controller may therefore switch to the first operating mode when a device in the priority list of devices connects to the access point in order to provide improved wireless performance regardless of the current wireless network traffic level.

The controller may be further configured to monitor movement of devices which are wirelessly connected to the access point and to switch the operation of the radio assembly from the second operating mode to the first operating mode in the event that movement of at least one device wirelessly connected to the access point is detected.

Physical movement of some devices may indicate that they are being actively used by a user. For example, portable devices such as a smartphone or tablet may be subjected to some physical movement during use. Physical movement of a device may indicate that higher network performance, traffic levels and/or speeds are desired. For example, while a user is sleeping or otherwise not engaged with their smartphone they may place their smartphone such that it remains stationary. When a user is ready to use their smartphone they may pick up the device to use it, resulting in physical movement of the device. This physical movement may indicate a desire for higher network performance, traffic levels and/or speeds. The controller may therefore switch the access point to the first operation in order to provide improved wireless performance regardless of the current wireless network traffic level.

The access point may be a first access point of a plurality of access points in the wireless local area network. Each of the plurality of access points may comprise a multi-band radio assembly configured to operate in the first frequency band and the second frequency band. Each of the radio assemblies of the plurality of access points may be operated in a first operating mode in which a radio assembly is configured to operate in both the first frequency band and the second frequency band and a second operating mode in which the radio assembly is configured to operate in the first frequency band and to disable operation of the radio assembly in the second frequency band.

The plurality of access points may cooperate to form a wireless mesh network (e.g., a full mesh network or partial mesh network). Additionally or alternatively, one or more of the plurality of access points may comprise an extender device (e.g., a WiFi extender). One or more of the plurality of access points may comprise a root access point. One or more of the plurality of access points may comprise a repeater access point.

In some examples, each of a plurality of access points may comprise a controller configured to switch between a first operating mode and a second operating mode based on the wireless network traffic at that access point. For example, a second access point of the plurality of access points may comprise a controller configured to switch operation of the radio assembly of the second access point between a first operating mode and a second operating mode. The controller of the second access point may be configured to monitor wireless network traffic transmitted and received by the second access point and to switch the operation of the radio assembly of the second access point between the first operating mode and the second operating mode in the event that the monitored wireless network traffic (for the second access point) crosses a traffic threshold.

In this way different wireless access points in the same wireless local area network may switch between operating modes at different times and based on wireless network traffic at those access points. For example, at a first time a relatively large number of devices may be connected to the second access point and/or one or more devices may exchange a relatively large amount of wireless network traffic over the second access point. However, at the first time a relatively small number of devices may be connected to the first access point and/or one or more devices may exchange a relatively small amount of wireless network traffic over the first access point. Accordingly at the first time, the radio assembly of the first access point may operate in the second operating mode and the radio assembly of the second access point may operate in the first operating mode.

At a second time wireless network traffic at the first access point may increase above a traffic threshold such that the radio assembly of the first access point switches to the first operating mode. At the second time, both the radio assembly of the first access point and the radio assembly of the second access point may operate in the first operating mode.

At a third time wireless network traffic at the second access point may decrease below a traffic threshold such that the radio assembly of the second access point switches to the second operating mode. At the third time, both the radio assembly of the first access point may operate in the first operating mode and the radio assembly of the second access point may operate in the second operating mode.

The controller may be configured to switch the operation of a radio assembly of at least another access point of the plurality of access points, between the first operating mode and the second operating mode in the event that the monitored wireless network traffic transmitted and received by the first access point crosses a traffic threshold.

The first access point may comprise a hub device of the wireless local area network such as a root access point. For example, the first access point may comprise a network gateway (e.g., providing a gateway to an external network such as an internet connection) and/or a network router. The operating mode of radio assemblies in a plurality of access points may be switched between a first operating mode and a second operating mode based on the wireless network traffic at the first access point. For example, all of the access points may be switched between the first operating mode and the second operating mode together and by the same controller.

According to a second aspect of the disclosure there is provided a network system comprising a plurality of access points for a wireless local area network, wherein the each of the access points of the plurality of access points are configured to provide wireless access points for connection to the same wireless local area network. Each access point of the plurality of access points comprises: a multi-band radio assembly configured to operate in a first frequency band and a second frequency band; and a controller configured to switch operation of the radio assembly between a first operating mode and a second operating mode. When the radio assembly is operated in the first operating mode, the radio assembly is configured to operate in both the first frequency band and the second frequency band. When the radio assembly is operated in the second operating mode, the radio assembly is configured to operate in the first frequency band and to disable operation of the radio assembly in the second frequency band. The controller is configured to monitor wireless network traffic transmitted and received by the access point and to switch the operation of the radio assembly between the first operating mode and the second operating mode in the event that the monitored wireless network traffic crosses a traffic threshold.

According to a third aspect of the disclosure there is provided a controller for an access point for a wireless local area network, wherein the access point comprises a multi-band radio assembly configured to operate in a first frequency band and a second frequency band. The controller is configured to switch operation of the radio assembly between a first operating mode and a second operating mode. When the radio assembly is operated in the first operating mode, the radio assembly is configured to operate in both the first frequency band and the second frequency band. When the radio assembly is operated in the second operating mode, the radio assembly is configured to operate in the first frequency band and to disable operation of the radio assembly in the second frequency band. The controller is configured to monitor wireless network traffic transmitted and received by the access point and to switch the operation of the radio assembly between the first operating mode and the second operating mode in the event that the monitored wireless network traffic crosses a traffic threshold.

According to a fourth aspect of the disclosure there is provided a method of operating an access point for a wireless local area network, wherein the access point comprises a multi-band radio assembly configured to operate in a first frequency band and a second frequency band. The method comprises:monitoring wireless network traffic transmitted and received by the access point; and switching operation of the radio assembly between a first operating mode and a second operating mode in the event that the monitored wireless network traffic crosses a traffic threshold. When the radio assembly is operated in the first operating mode, the radio assembly is configured to operate in both the first frequency band and the second frequency band. When the radio assembly is operated in the second operating mode, the radio assembly is configured to operate in the first frequency band and to disable operation of the radio assembly in the second frequency band.

The method may comprise monitoring wireless network traffic transmitted and received by the access point and switching the operation of the radio assembly from the first operating mode to the second operating mode in the event that the monitored wireless network traffic decreases below a first traffic threshold.

The method may comprise monitoring wireless network traffic transmitted and received by the access point and to switching the operation of the radio assembly from the second operating mode to the first operating mode in the event that the monitored wireless network traffic increases above a second traffic threshold.

The second traffic threshold may be greater than the first traffic threshold.

Operating in the second frequency band may consumes more power than operating in the first frequency band.

The first frequency band may comprise frequencies which are less than frequencies in the second frequency band.

The multi-band radio assembly may be further configured to operate in a third frequency band. When the radio assembly is operated in the first operating mode, the radio assembly may be configured to operate in the first frequency band, the second frequency band and the third frequency band. When the radio assembly is operated in the second operating mode, the radio assembly may be configured to operate in the first frequency band and to disable operation of the radio assembly in the second frequency band and the third frequency band.

The method may further comprise: monitoring the identity of devices which are wirelessly connected to the access point; and switching the operation of the radio assembly from the second operating mode to the first operating mode in the event that a device in a stored priority list of devices wirelessly connects to the access point.

The method may further comprise: monitoring movement of devices which are wirelessly connected to the access point; and switching the operation of the radio assembly from the second operating mode to the first operating mode in the event that movement of at least one device wirelessly connected to the access point is detected.

The access point may be a first access point of a plurality of access points in the wireless local area network. Each of the plurality of access points may comprise a multi-band radio assembly configured to operate in the first frequency band and the second frequency band. Each of the radio assemblies of the plurality of access points can be operated in a first operating mode in which a radio assembly operates in both the first frequency band and the second frequency band and a second operating mode in which the radio assembly operates in the first frequency band and disables operation of the radio assembly in the second frequency band. The method may further comprise switching the operation of a radio assembly of at least another access point of the plurality of access points, between the first operating mode and the second operating mode in the event that the monitored wireless network traffic transmitted and received by the first access point crosses a traffic threshold.

According to a fifth aspect of the disclosure there is provided a computing apparatus comprising: one or more processors; and memory comprising instructions which when executed by one or more of the processors cause the computing apparatus to be operable to perform a method according to the fourth aspect.

According to a sixth aspect of the disclosure there is provided a computer readable medium carrying instructions which when executed by one or more processors of a computing apparatus, cause the computing apparatus to be operable to carry out a method according to the fourth aspect.

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE DRAWINGS

Certain examples of the present disclosure will now be described, with reference to the accompanying drawings, in which:
- FIG. 1 is a schematic illustration of an example of a wireless local area network 114;
- FIG. 2 is a schematic illustration of a further example of a wireless local area network;
- FIG. 3 is a schematic illustration of an access point 302 according to examples disclosed herein;
- FIG. 4 is a flowchart of a method 400 of operating an access point 302 for a wireless local area network according to examples disclosed herein;
- FIG. 5 is a schematic graph illustrating an example operation of an access point according to examples disclosed herein; and
- FIG. 6 is a schematic illustration of an example electronic device.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

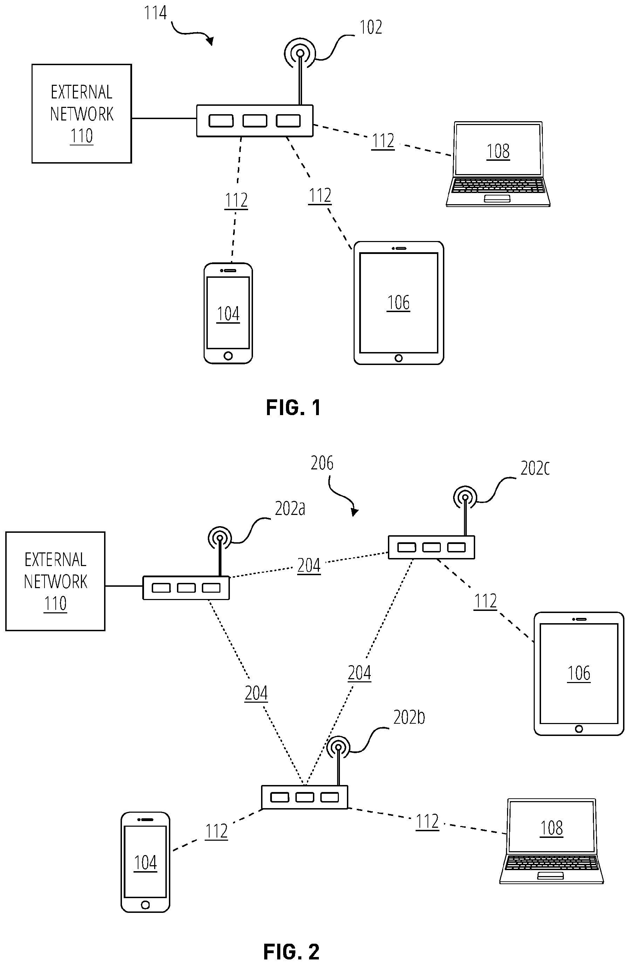

FIG. 1 is a schematic illustration of an example of a wireless local area network 114. The wireless local area network 114 includes a wireless access point 102. The access point 102 comprises any suitable device for providing wireless connectivity to one or more devices situated in a wireless range of the access point 102. The access point 102 may, for example, form part of a wireless router (e.g., a wireless router in a home network). The access point 102 may be a Wireless Fidelity (WiFi) access point and may provide wireless connectivity to one or more devices using WiFi protocols (e.g., protocols included in the IEEE 802.11 standards).

In the example shown in FIG. 1 the access point 102 is shown as providing wireless connectivity to a first device 104 (which may, for example, comprise a smartphone), a second device 106 (which may, for example, comprise a tablet) and a third device 108 (which may comprise a personal computer such as a laptop or desktop computer). Each of the devices 104, 106, 108 establish wireless connections 112 with the access point 102 (e.g., using WiFi protocols) to connect to the wireless local area network 114. The access point 102 receives wireless radio signals transmitted by the devices 104, 106, 108 and transmits wireless radio signals which are received by the devices 104, 106, 108 in order to provide wireless connectivity to the devices 104, 106, 108 and exchange data packets with the devices 104, 106, 108.

The access point 102 may provide connected devices 104, 106, 108 with access to an external network 110, such as the internet. For example, the access point 102 may comprise or otherwise be connected to a router which provides a connection to the external network 110 (such as the internet).

The access point 102 may function as a root access point. For example, the access point 102 may form part of a wireless router such as a WiFi hub or WiFi router. Additionally or alternatively, the access point 102 may have a wired connection to an external network 110.

In other examples, the access point 102 may function as an extender or repeater access point 102. For example, the access point 102 may comprise a wireless mesh extender and/or wireless repeater device. The access point 102 may establish a backhaul connection with other components of the local area network (which may be a wired or wireless backhaul connection).

FIG. 2 is a schematic illustration of a further example of a wireless local area network 206. The wireless local area network 206 shown in FIG. 2 comprises a first access point 202a, a second access point 202b and a third access point 202c. Any of the first access point 202a, second access point 202b and third access point 202c may include any of the features described above with reference to the access point 102 shown in FIG. 1. The first access point 202a, second access point 202b and third access point 202c may each provide wireless connectivity to the same local area network. The access points 202a, 202b, 202c may be connected to each other and/or other components of the local area network via backhaul connections 204, which may be realised as wired or wireless connections. In the example shown in FIG. 2 the backhaul connections 204 form a fully connected network in which each of the access points 202a, 202b, 202c are connected to each other. In other examples, there may not be direct connections between each of the access points 202a, 202b, 202c with each other to form a partially connected network. For example, the direct backhaul connection 204 between the second access point 202b and the third access point 202c may be omitted.

A plurality of access points 202a, 202b, 202c configured to provide wireless access points for connection to the same wireless wireless local area network 206 may be referred to as a network system.

A wireless local area network 206 including a plurality of access points 202a - 202c may be configured as a mesh network (e.g., a full mesh network or partial mesh network). Additionally or alternatively one or more access points may function as an extender or repeater device.

Different devices may connect to different access points 202a - 202c in the network depending on their position and/or signal strength received from an access point 202a - 202c. In the example, shown in FIG. 1, the first device 104 and second device 106 are positioned closest to the second access point 202b and establish wireless connections 112 with the second access point 202b. The third device 108 is positioned closest to the third access point 202c and establishes a wireless connection 112 with the third access point 202c.

The access points 202a - 202c may provide a connection to an external network 110 such as the internet. In the example, shown in FIG. 2 the first access point 202a is a root access point with a connection to an external network 110 (e.g., the internet). For example, the first access point 202a may comprise a router. The second access point 202b and third access point 202c (and devices connected to those access points) may establish a connection with an external network 110 through the backhaul connections 204 between the first access point 202a and both the second access point 202b and the third access point 202c.

It will be appreciated that a large variety of different network arrangements are possible, not all of which are described and depicted herein.

Whilst three example devices 104, 106, 108 are depicted and described as being wirelessly connected to an access point with reference to FIG. 1 and FIG. 2, it will be appreciated that a wide variety of different devices and different numbers of devices may establish a wireless connection to an access point of the type described herein. For example, devices such as Internet of Things (IoT), connected home devices and/or connected sensor devices may wirelessly connect to an access point.

As described above, wireless access points provide wireless connectivity by exchanging wireless radio signals with one or more connected devices. In particular, a wireless access point transmits wireless radio signals for receipt by one or more devices and receives wireless radio signals transmitted by one or more devices. Radio signals are transmitted and received in one or more frequency bands. For example, most WiFi access points operate in (i.e., transmit and receive signals in) a frequency band referred to as the 2.4 gigaHertz (GHz) frequency band. The 2.4 GHz frequency band typically comprises a plurality of frequency channels having central frequencies between about 2.4 GHz and 2.5 GHz.

Many WiFi access points are multi-band access points and in addition to the 2.4 GHz frequency band they also operate in a frequency band referred to as a 5 GHz frequency band. The 5 GHz frequency band typically comprises a plurality of frequency channels having central frequencies between about 5 GHz and 5.9 GHz. Additionally or alternatively, some WiFi access points may operate in a frequency band referred to as a 6 GHz frequency band. The 6 GHz frequency band typically comprises a plurality of frequency channels having central frequencies between about 5.9 GHz and 7.1 GHz.

Different frequency bands may have different performance and power consumption properties associated with them. For example, the 2.4 GHz frequency band typically provides coverage over a longer distance range than the 5 GHz frequency band. The 5 GHz frequency band typically provides coverage over a longer distance range than the 6 GHz frequency band. The 2.4 GHz frequency band is typically better at providing coverage through solid objects such as walls than the 5 GHz frequency band. The 5 GHz frequency band is typically better at providing coverage through solid objects such as walls than the 6 GHz frequency band.

Wireless data transfer speeds are generally slower using the 2.4 GHz frequency band than the 5 GHz frequency band. For example, the 2.4 GHz frequency band may deliver wireless data transfer speeds of up to about 100 megabits per second (Mbps), whereas the 5 GHz frequency band may deliver wireless data transfer speeds of up to about 1 gigabit per second (Gbps). The 6 GHz frequency band may deliver wireless data transfer speeds which are faster than both the 2.4 GHz frequency band and the 5 GHz frequency band. For example, the 6 GHz frequency band may deliver wireless data transfer speeds of up to about 2 Gbps.

In summary, the 2.4 GHz frequency band typically provides coverage over a longer range and provides better signal penetration through solid objects than both the 5 GHz and 6 Hz frequency bands, whereas the 5 GHz and 6GHz frequency bands typically provide faster connection speeds and improved bandwidth when compared with the 2.4 GHz frequency band. Some access points support operation in multiple frequency bands and a suitable frequency band can be chosen based on factors such as device compatibility and performance requirements.

In addition to providing desired wireless connection performance (e.g., range, speed, bandwidth etc.), it may further be desirable to reduce power consumption of a wireless access point. For example, wireless access points typically operate for long periods of time and may, for example, operate at all times. Operation for long time periods of time can lead to relatively large energy consumption. Furthermore, increases in the number of devices which utilise wireless connections and the amount of wireless data transfer used by devices have increased the energy consumption of wireless access points.

Devices and methods are disclosed herein which reduce energy consumption of a wireless access point without significantly impacting wireless network performance.

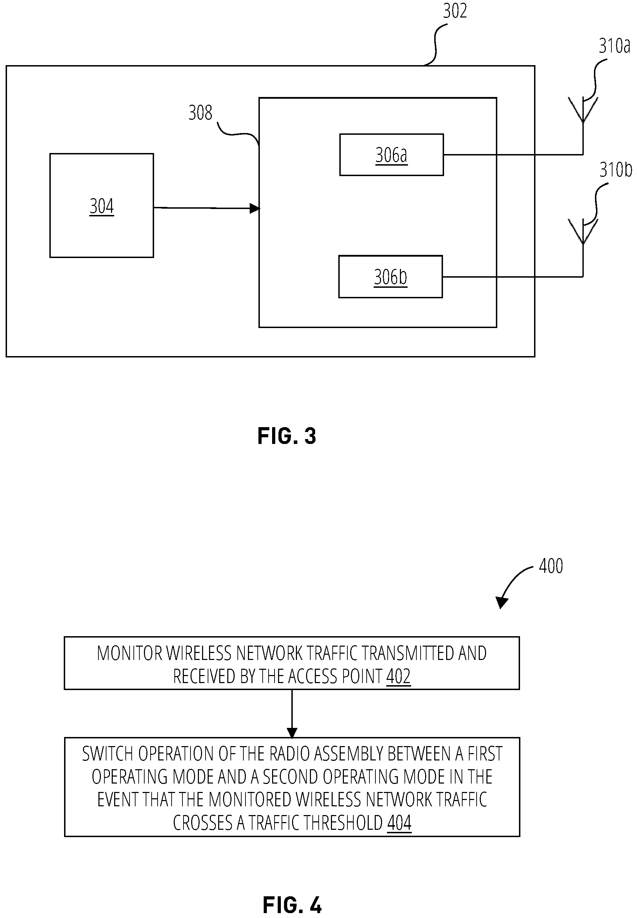

FIG. 3 is a schematic illustration of an access point 302 according to examples disclosed herein. The access point 302 comprises a controller 304, a multi-band radio assembly 308, a first antenna 310a and a second antenna 310b. In the example shown in FIG. 3 the radio assembly 308 comprises a first transceiver 306a coupled to the first antenna 310a and a second transceiver 306b couple to the second antenna 310b. The first transceiver 306a and second transceiver 306b may comprise any suitable components for transmitting and receiving radio frequency signals using the first antenna 310a and the second antenna 310b respectively. For example, the first transceiver 306a and the second transceiver 306b may comprise respective radio chains.

For ease of illustration only a first antenna 310a and a second antenna 310b are shown in FIG. 3, an access point as contemplated herein may include any suitable number of antenna. For example, the first transceiver 306a may be coupled to a plurality of antennas and/or the second transceiver 306b may be coupled to a plurality of antennas. In some examples, the first transceiver 306a and the second transceiver 306b may share one or more antennas.

The first transceiver 306a may be configured to operate in (i.e., transmit and receive signals in) a first frequency band. For example, the first band may comprise the 2.4 GHz frequency band. The second transceiver 306b may be configured to operate in (i.e., transmit and receive signals in) a second frequency band. The second frequency band may comprise the 5 GHz frequency band.

Whilst the first transceiver 306a and the second transceiver 306b are depicted in FIG. 3 as comprising separate components, in some examples, the first transceiver 306a and second transceiver 306b may share one or more components. In general, any suitable multi-band radio assembly 308 may be used which is configured to operate in at least a first frequency band and a second frequency band (and with one or more antenna). The multi-band radio assembly 308 may be embodied as one or more, radios, radio chains, cards and/or chips.

In some examples, a multi-band radio assembly 308 may be configured to operate in more than two frequency bands. For example, the radio assembly 308 may be further configured to operate in a third frequency band (such as the 6 GHz frequency band). For example, whilst not shown in FIG. 3, the multi-band radio assembly 308 may comprise a third transceiver configured to operate in a third frequency band (such as the 6 GHz frequency band). Such a third transceiver may be coupled to an antenna (e.g., a third antenna).

Operation in each of the frequency bands (e.g., the first frequency band, the second frequency band and optionally a third frequency band) may comprise broadcasting the same wireless network name on each frequency band. A wireless network name may, for example, comprises a Service Set Identifier (SSID). By broadcasting the same wireless network name (e.g., SSID) on a plurality of frequency bands devices can seamlessly switch between connection over different frequency bands without reconfiguring the network to which the device connects.

The radio assembly 308 may be operated in at least a first operating mode and a second operating mode. In the first operating mode, the radio assembly 308 is configured to operate in both the first frequency band and the second frequency band. For example, both the first transceiver 306a and the second transceiver 306b may be operational in the first operating mode and may, for example, transmit and receive radio signals in the first and second frequency bands respectively. Accordingly, one or more devices may establish and use a wireless connection with the access point using one or both of the first frequency band and the second frequency band.

In examples, in which the radio assembly 308 is further configured to operate in a third frequency band, the radio assembly 308 may operate in the third frequency band when operating in the first operating mode. For example, in the first operating mode a third transceiver configured to operate in a third frequency band may be operational and may, for example, transmit and receive radio signals in the third frequency band.

In the first operating mode relatively high wireless data transfer speeds and bandwidth may be supported. For example, devices may connect to the access point 302 using a second frequency band (e.g., 5 GHz frequency band) and/or a third frequency band (e.g., 6 GHz frequency band), which may provide relatively high bandwidth and relatively fast data transfer speeds. In the first operating mode one or more devices may additionally or alternatively connect to the access point 302 using the first frequency band (2.4 GHz). For example, one or more devices may be located out of range of the second and/or third frequency bands and may connect to the access point 302 using the first frequency band. Additionally or alternatively, one or more devices may support operation in the first frequency band but not the second frequency band and/or third frequency band and may accordingly connect to the access point 302 using the first frequency band.

The first operating mode may provide relatively high levels of wireless network performance (e.g., speed, bandwidth etc.) but may consume relatively large amounts of energy. For example, operation of the radio assembly 308 in the second frequency band and/or the third frequency power may consume more power at the access point 302 than operation of the radio assembly 308 in the first frequency band. Operation of the second frequency band and/or the third frequency band may therefore consume relatively large amounts of energy.

In the second operating mode the radio assembly 308 is configured to operate in the first frequency band and to disable operation of the radio assembly 308 in the second frequency band. In examples in which the radio assembly 308 is also operable in a third frequency band, the radio assembly 308 may be configured to further disable operation of the radio assembly 308 in the third frequency band when operating in the second operating mode.

Operation of the radio assembly 308 in the second frequency band (and optionally a third frequency band) may be disabled, for example, by turning off (e.g., powering down) one or more components in the radio assembly 308 which are associated with operation in the second frequency band (and optionally one or more components associated with operation in the third frequency band). For example, the second transceiver 306b (and optionally a third transceiver if included) may be turned off (e.g., powered down) during operation in the second operating mode. Additionally or alternatively, one or more of a card, a chip, a radio chain and/or an antenna which is configured for operating in the second frequency band (and optionally corresponding components for a third frequency band) may be turned off during the second operating mode.

In some examples, disabling operation of the radio assembly 308 in a frequency band (e.g., the second frequency band and/or a third frequency band) may comprise reducing energy consumption of one or more components configured for operating in the respective frequency band. For example, an antenna power of one or more antennas configured for operating in the respective frequency band may be reduced (e.g., reduced to substantially zero power) so as to disable operation of the radio assembly 308 in the respective frequency band.

When operating in the second operating mode, all devices connected to the access point 302 may be connected using the first frequency band. Accordingly, the bandwidth and/or data transfer speeds available in the second operating mode may be reduced when compared to the first operating mode. However, power and overall energy consumption of the radio assembly 308 may be reduced, when compared to operation in the first operating mode.

The controller 304 is configured to switch operation of the radio assembly 308 between the first operating mode and the second operating mode. For example, the controller 304 may switch operation of the radio assembly 308 between the first operating mode and the second operating mode in order to reduce energy consumption of the access point 302 whilst maintaining desired wireless connection performance. As described in further detail below, according to examples disclosed herein, the controller 304 may switch operation of the radio assembly 308 between the first operating mode and the second operating mode in dependence on a monitored level of wireless network traffic transmitted and received by the access point 302.

In some examples in which the access point 302 can operate in three (or more) frequency bands, the controller 304 may be further configured to switch operation of the radio assembly 308 between the first operating mode, the second operating mode and a third operating mode. As described above, when the radio assembly 308 is operated in the first operating mode, the radio assembly may be configured to operate in the first frequency band, the second frequency band and the third frequency band. When the radio assembly 308 is operated in the second operating mode, the radio assembly may be configured to operate in the first frequency band and to disable operation of the radio assembly in the second frequency band and the third frequency band. When the radio assembly is operated in the third operating mode, the radio assembly may be configured to operate in the first frequency band and the second frequency band and to disable operation of the radio assembly in the third frequency band.

The third operating mode may comprise an intermediate between the first operating mode and the second operating mode. The controller 304 may be configured to switch the operation of the radio assembly between the first operating mode, the second operating mode and the third operating in the event that the monitored wireless network traffic crosses a traffic threshold.

The third operating mode may provide a performance (e.g., wireless network speeds and/or bandwidth) which is improved when compared to the second operating mode but which is not as good as the first operating mode (in which all of the first, second and third frequency bands are operational). The third operating mode may consume more power than the second operating mode but less power than the first operating mode.

The controller 304 may comprise any suitable electronic device or component configured to execute control logic. For example, the controller 304 may comprise one or more processor for executing stored instructions. The controller 304 may comprise a computing device. The controller 304 is communicatively coupled with the radio assembly 308 so as to allow the controller 304 to control the operating mode of the radio assembly 308.

FIG. 4 is a flowchart of a method 400 of operating an access point 302 for a wireless local area network according to examples disclosed herein. The method 400 may be implemented by a controller 304 as described above with reference to FIG. 3. The access point 302 whose operation is controlled according to the method 400 of FIG. 4 may comprise any access point 302 as described herein, such as an access point 302 as described above with reference to FIG. 3. In general, the access point 302 comprises a multi-band radio assembly 308 configured to operate in at least a first frequency band and a second frequency band.

In step 402, wireless network traffic which is transmitted and received by the access point 302 is monitored. The monitoring of wireless network traffic transmitted and received by the access point 302 may comprise monitoring network traffic per unit of time. For example, the monitoring may comprise monitoring network traffic transmitted and received in a sample time period. The sample time period may, for example, comprise a period of one or more seconds (e.g., 1 second, 2 seconds, 5 seconds etc.). The sample time period may, for example, comprise a period of up to about a minute. In some examples, the sample time period may comprise a time period of greater than a minute.

The monitoring of wireless network traffic transmitted and received by the access point 302 may comprise monitoring an amount of data which is transmitted and received by the access point (e.g., per unit of time). An amount of data may be monitored, for example, as a number of data packets and/or a volume of data, which is transmitted and received by the access point 302 (e.g., per unit of time). In some examples, the monitoring of wireless network traffic transmitted and received by the access point 302 may comprise monitoring a number of data packets per second and/or a number of bits per second, kilobits per second, megabits per second, gigabits per second or any other suitable measure.

At step 404 operation of the radio assembly 308 of the access point 302 is switched between a first operating mode and a second operating mode in the event that the monitored wireless network traffic crosses a traffic threshold. The first operating mode and the second operating mode may have any of the features of the first operating mode and second operating mode which were described above with reference to FIG. 3. In particular, when the radio assembly 308 is operated in the first operating mode, the radio assembly 308 is configured to operate in both the first frequency band and the second frequency band. When the radio when the radio assembly is operated in the second operating mode, the radio assembly is configured to operate in the first frequency band and to disable operation of the radio assembly in the second frequency band.

In the event that the monitored network traffic crosses a traffic threshold, the controller 304 may transmit a control signal to the radio assembly 308 to cause the radio assembly 308 to switch between the first operating mode and the second operating mode. Switching the operation of the radio assembly 308 between the first operating mode and the second operating mode may comprise switching the operation of the radio assembly 308 from the first operating mode to the second operating mode or may comprise switching the operation of the radio assembly 308 from the second operating mode to the first operating mode.

The operation of the radio assembly 308 may be switched from the first operating mode to the second operating mode when the monitored network traffic decreases below a first traffic threshold. The decrease of network traffic to below the first traffic threshold may indicate that use of the access point 302 is relatively low and thus that the higher performance associated with the first operating mode is not needed. The operation of the radio assembly 308 may therefore be switched to the second operating mode in order to save energy. Since each frequency band uses the same wireless network name (e.g., SSID) a device which is connected to the access point 302 using the second frequency band prior to switching to the second operating mode may seamlessly switch to using the first frequency band once the second frequency band is disabled in the second operating mode.

The operation of the radio assembly 308 may be switched from the second operating mode to the first operating mode when the monitored network traffic increase above a second traffic threshold. The increase of network traffic to above the second traffic threshold may indicate that use of the access point 302 has increased and thus that the higher performance associated with the first operating mode may be desired. The operation of the radio assembly 308 may therefore be switched to the first operating mode in order to provide improved performance. Since each frequency band uses the same wireless network name (e.g., SSID) a device which is connected to the access point 302 using the first frequency band prior to switching to the first operating mode may (if compatible) switch to using the second frequency band once the second frequency band is enabled in the first operating mode.

The first traffic threshold (at which the operating mode is switched from the first operating mode to the second operating mode) may be different to the second traffic threshold (at which the operating mode is switched from the second operating mode to the first operating mode). For example, the first traffic threshold may be less than the second traffic threshold. The use of different thresholds may prevent multiple switches between operating modes in a relatively short time period in the event that the wireless network traffic fluctuates close to a traffic threshold.

Whilst not included in the method 400 shown in FIG. 4 in some examples, the method may comprise switching operation of the radio assembly between the first operating mode, the second operating mode and a third operating mode. As was described above, a third operating mode may be available for access points 302 configured to operate in three (or more frequency bands). When the radio assembly 308 is operated in the third operating mode, the radio assembly 308 may be configured to operate in the first frequency band and the second frequency band and to disable operation of the radio assembly in the third frequency band.

The operation of the radio assembly 308 may be switched between the first operating mode, the second operating mode and the third operating in the event that the monitored wireless network traffic crosses a traffic threshold. For example, if the access point 302 is operating in the second operating mode, the operation may be switched to the third operating mode (in which the second frequency band becomes operational) in the event that the monitored wireless traffic increases above a first traffic threshold. The operation may then be switched to the first operating mode (in which all of the first, second and third operating modes are operational) if the monitored wireless traffic increases above a second traffic threshold (where the second traffic threshold is higher than the first traffic threshold).

When operating in the first operating mode, the operation may be switched to the third operating mode (in which the third frequency band is disabled) in the event that the monitored wireless traffic decreases below a third traffic threshold. The operation may then be switched to the second operation mode if the monitored wireless traffic decreases below a fourth traffic threshold (where the fourth traffic threshold is lower than the third traffic threshold).

In some examples, an access point 302 may be operated according to the method 400 of FIG. 4 at all times. For example, the controller 304 may continuously monitor the wireless network traffic and switch the operating mode of the radio assembly 308 based on the current wireless network traffic.

However, in some examples, there may be time periods during which the second operating mode is not available and radio assembly 308 may continuously operate in the first operating mode regardless of the current wireless network traffic. For example, the access point 302 may operate in a performance mode during which the radio assembly 308 only operates in the first operating mode (regardless of the current wireless network traffic). Performance mode may, for example, be enabled during peak usage times or when a need for high performance (e.g., high data transfer speeds) is anticipated.

During other time periods (e.g., when a performance mode is not used) the access point 302 may operate in an economical mode. When operating in an economical mode, the controller 304 may implement a method 400 as described above with reference to FIG. 4 in which the operating mode of the radio assembly 308 can be switched between the first operating mode and the second operating mode based on the wireless network traffic. The economical mode may be used, for example, during off-peak usage times or when a need for high performance (e.g., high data transfer speeds) is not anticipated.

Time periods during which the access point 302 operates in a performance mode and a time periods during which the access point 302 operates in an economical mode may be determined according a pre-defined schedule. For example, a user may configure a schedule comprising times at which the access point 302 operates in the performance mode and times at which the access point 302 operates in the economical mode. In some examples, a time schedule of operation in performance mode and an economical mode may be dynamically set and/or updated based on monitored usage patterns of the access point 302.

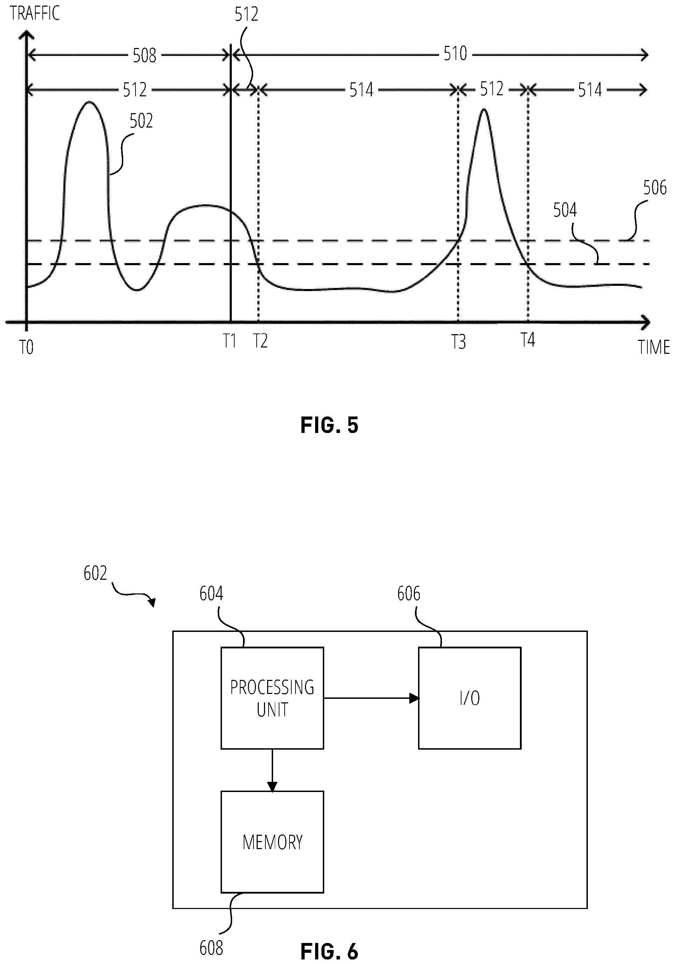

FIG. 5 is a schematic graph illustrating an example operation of an access point 302 according to examples disclosed herein. The vertical axis in FIG. 5 indicates a level of monitored wireless network traffic over the access point 302, with a level of wireless network traffic increasing from bottom to top in FIG. 5. The horizontal axis in FIG. 5 indicates time with time progressing from left to right in FIG. 5. FIG. 5 therefore represents a level of wireless network traffic as a function of time. The level of wireless network traffic at different times is plotted by a solid line labelled 502 in FIG. 5.

Also shown in FIG. 5 is a first traffic threshold 504 and a second traffic threshold 506. As described above the first traffic threshold 504 is a threshold at which operation of the radio assembly 308 may be switched from a first operating mode to a second operating mode. The second traffic threshold 506 is a threshold at which operation of the radio assembly 308 may be switched from the second operating mode to the first operating mode. As shown in FIG. 5, the second traffic threshold 506 may be greater than the first traffic threshold 504.

A time period during which the access point 302 is operated in a performance mode 508 are indicated in FIG. 5 by a double-headed arrow labelled 508. A time period during which the access point 302 is operated in an economical mode 510 are indicated in FIG. 5 by a double-headed arrows labelled 510. Time periods during which the radio assembly 308 is operated in a first operating mode are indicated in FIG. 5 by double-headed arrows labelled 512. Time periods during which the radio assembly 308 is operated in a second operating mode are indicated in FIG. 5 by double-headed arrows labelled 514.

Between a time T0 and a time T1 shown on the horizontal axis of FIG. 5, the access point 302 is operated in a performance mode 508. As was described above, during operation in the performance mode 508, the radio assembly 308 is only operated in the first operating mode 512 regardless of the level of wireless network traffic 502. For example, as shown in FIG. 5 the wireless network traffic 502 may decrease below the first traffic threshold 504 but the radio assembly 308 continues to operate in the first operating mode 512.

From the time T1 onwards, the access point 302 is operated in an economical mode 510. As was described above, during operation in the economical mode 510, the radio assembly 308 may be switched between the first operating mode 512 and the second operating mode 514.

Between times T1 and T2, the wireless network traffic 502 remains above the first traffic threshold 504 and the radio assembly 308 continues to operate in the first operating mode 512. At time T2, the wireless network traffic 502 decreases below the first traffic threshold 504 and accordingly operation of the radio assembly 308 is switched from the first operating mode 512 to the second operating mode 514. For example, fewer users may be using devices connected to the access point 302 and/or there may be a reduced demand for wireless network traffic. Energy can therefore be saved by operating in the second operating mode 514. Whilst energy is saved in the second operating mode 514, wireless connectivity is maintained through continued operation of the radio assembly 308 in the first frequency band. This may be particularly beneficial for devices (such as connected home devices and/or sensors) which are continuously within range of the access point 302 and benefit from continuous wireless connectivity.

Between times T2 and T3, the wireless network traffic 502 remains below the second traffic threshold 506 and the radio assembly 308 continues to operate in the second operating mode 514. At time T3, the wireless network traffic 502 increases above the second traffic threshold 506 and accordingly operation of the radio assembly 308 is switched from the second operating mode 514 to the first operating mode 512. For example, one or more new devices may come into range of the access point 302 and may connect to the access point 302 thereby leading to an increase in wireless network traffic 502. Additionally or alternatively, one or more devices may begin an activity associated with increased wireless network traffic 502. For example, a user may begin streaming a video or music using a wirelessly connected device, leading to an increase in wireless network traffic 502. Additionally or alternatively, a device may begin downloading a software update leading to an increase in wireless network traffic 502. Despite operating in the economical mode 510, the access point 302 can improve performance of the wireless local area network to meet the demand of increased wireless network traffic 502 by switching to the first operating mode 512.

Between times T3 and T4 the wireless network traffic 502 remains above the first traffic threshold 504 and the radio assembly 308 continues to operate in the first operating mode 512. At time T4, the wireless network traffic 502 decreases below the first traffic threshold 504 and accordingly operation of the radio assembly 308 is switched from the first operating mode 512 to the second operating mode 514. For example, one or more devices may move out of range of the access point 302 and may disconnect from the access point 302 leading to a decrease in wireless network traffic 502. Additionally or alternatively, one or more actions such as media streaming or file download may come to an end resulting in a decrease in wireless network traffic 502. The access point 302 can adapt to this decrease in wireless network traffic 502 and save energy by operating in the second operating mode 514. Wireless connectivity is once again maintained during operation in the second operating mode 514 through continued operation of the radio assembly 308 in the first frequency band.

Examples have been described above in which operation of a radio assembly 308 is switched between a first operating mode and a second operating mode in dependence on a comparison between monitored network traffic and a first traffic threshold 504 and second traffic threshold 506. In some examples, operation of a radio assembly 308 may be switched between a first operating mode, a second operating mode and a third operating mode. As was explained above a third operating mode may be implement for access points 302 which are operable in three (or more) frequency bands. For example, in the third operating mode the first frequency band and the second frequency band may be operational but operation of a third frequency band may be disabled. Operation may be switched to a third operating mode in dependence on one or more further traffic thresholds.

Examples, have been described above in which operation of a radio assembly 308 is switched between a first operating mode and a second operating mode in dependence on monitored wireless network traffic. In some examples, one or more additional factors may be used to switch operation of the radio assembly 308 is switched between a first operating mode and a second operating mode.

For example, the controller 304 may monitor the identity of devices which are wirelessly connected to the access point 302. The controller 304 may further maintain, store and/or access a priority list of devices for which an improved wireless network performance is desired. For example, a user's personal device(s) and/or device(s) which typically require relatively high data transfer speeds may be included in a priority list of devices. The controller 304 may be configured to switch operation of the radio assembly 308 to the first operating mode (e.g., if in the second operating mode at the time), upon detection that a device in the priority list of devices wirelessly connects to the access point 302.

For example, a device in the priority list of devices may initially be out of range of the access point 302 and/or turned off. During such a time, the controller 304 may operate as described above with reference to an economical mode. In the event that a device in the priority list of devices connects to the access point 302 (e.g., it comes into range of the access point 302 and/or turns on) then the controller 304 may switch operation of the radio assembly 308 to the first operating mode so as to provide improved wireless performance for the device in the priority list. The access point 302 may, for example, operate in a performance mode when at least one device included in a priority list is connected to the access point 302.

Additionally or alternatively, the controller 304 may monitor physical movement of one or more devices which are wirelessly connected to the access point 302. Physical movement of a device may indicate that it is being actively used by a user. For example, a portable device such as a smartphone or tablet may be subjected to some physical movement during use. Physical movement of a device may indicate that the device is being actively used and that higher network performance is desired. For example, while a user is sleeping or otherwise not engaged with a portable device they may place the portable device such that it remains stationary. When a user is ready to use their portable device they may pick up the device to use it, resulting in physical movement of the device. This physical movement may indicate a desire for higher network performance. The controller 304 may switch the operation of the radio assembly 308 from the second operating mode to the first operating mode in the event that movement of at least one device wirelessly connected to the access point is detected in order to provide improved wireless network performance.

As was explained, for example with reference to FIG. 2, in some examples a wireless local area network 206 may comprise a plurality of access points. In such examples, an access point 302 according to examples disclosed herein may be implemented in a number of different ways.

In some examples, a single access point 302 of a plurality of access points (which may, for example correspond with root access point and/or router in the network) may comprise a controller 304 configured to switch operation of a radio assembly 308 between a first operating mode and a second operating mode as described herein. The controller 304 may only switch the operating mode of the radio assembly 308 included in the access point 302 in which the controller 304 is included. For example, in the arrangement shown in FIG. 2, the first access point 202a may comprise a controller 304 configured to switch the operating mode of a radio assembly 308 included in the first access point 202a. The controller 304 of the first access point 202a may be configured to switch the operating mode of the radio assembly 308 included in the first access point 202a in dependence on monitored wireless network traffic transmitted and received at the first access point 202a. An operating mode of other access points 202b, 202c in the same network may not be switched and may remain constant. For example, other access points 202b, 202c in the same network may include radio assemblies which consistently operate in a first operating mode.

In some examples, an access point 302 of a plurality of access points (which may, for example correspond with root access point and/or router in the network) may comprise a controller 304 configured to switch operation of a plurality of radio assemblies 308 included in a plurality of access points. For example in the arrangement shown in FIG. 2, the first access point 202a may comprise a controller 304 configured to switch the operating mode of a radio assembly 308 included in the first access point 202a, a radio assembly 308 included in the second access point 202b and a radio assembly 308 included in the third access point 202c. The controller 304 of the first access point 202a may be configured to switch the operating mode of the radio assemblies 308 included in the first access point 202a, second access point 202b and third access point 202c in dependence on monitored wireless network traffic transmitted and received at the first access point 202a.

In some examples, a wireless local area network may include a plurality of access points each of which include a controller 304 configured to perform the method 400 described above with reference to FIG. 4. The controller 304 of each access point 302 may be configured to switch operation of a radio assembly 308 included in the respective access point 302 in dependence on monitored wireless network traffic transmitted and received at the respective access point 302. For example, in the arrangement shown in FIG. 2, a controller 304 of the first access point 202a may be configured to switch operation of a radio assembly 308 included in the first access point 202a in dependence on monitored wireless network traffic transmitted and received at the first access point 202a. A controller 304 of the second access point 202b may be configured to switch operation of a radio assembly 308 included in the second access point 202b in dependence on monitored wireless network traffic transmitted and received at the second access point 202b. A controller 304 of the third access point 202c may be configured to switch operation of a radio assembly 308 included in the third access point 202c in dependence on monitored wireless network traffic transmitted and received at the third access point 202c.

Various methods have been described herein in which some of the method steps may be implemented on any suitable electronic device (such as a controller and/or computing device) and/or combination of electronic devices (e.g., controllers and/or computing devices). FIG. 6 is a schematic illustration of an example electronic device 602 which may be used to implement all or part of any method described herein. For example, an electronic device 602 of the type shown in FIG. 6 and as described below may be used to implement all or part of a controller 304 as described herein. An electronic device 602 of the type shown in FIG. 6 and as described below may be used to implement all or part of method of operating an access point as described herein.

The electronic device 602 may include at least one processing unit 604, memory 608 and an input/output interface 606 (I/O). The processing unit 604 may include any suitable processor and/or combination of processors. For example, the processing unit 604 may include one or more of a Central Processing Unit (CPU) and a Graphical Processing Unit (GPU). The memory 608 may include volatile memory and/or non-volatile/persistent memory. The memory 608 may, for example, be used to store data such as an operating system, instructions to be executed by the processing unit (e.g. in the form of software to be executed by the processing unit), configuration information related to the electronic device 602, session information and/or configuration or registration information associated with any other device, node or module in a network. In some examples, the memory 608 may be used to store instructions for executing any of the methods disclosed herein.

At least the processing unit 604 is connected to the input/output interface 606. The input/output interface 606 may facilitate communication with one or more other devices and/or components. For example, the input/output interface 606 may be operable to transmit a control signal for controlling a radio assembly and/or receive monitored wireless network traffic. The input/output interface 606 may, for example, comprise a wired interface for establishing a wired connection with one or more other components and/or devices.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. An access point for a wireless local area network, the access point comprising:
a multi-band radio assembly configured to operate in a first frequency band and a second frequency band; and
a controller configured to switch operation of the radio assembly between a first operating mode and a second operating mode,
wherein when the radio assembly is operated in the first operating mode, the radio assembly is configured to operate in both the first frequency band and the second frequency band,
wherein when the radio assembly is operated in the second operating mode, the radio assembly is configured to operate in the first frequency band and to disable operation of the radio assembly in the second frequency band, and
wherein the controller is configured to monitor wireless network traffic transmitted and received by the access point and to switch the operation of the radio assembly between the first operating mode and the second operating mode in the event that the monitored wireless network traffic crosses a traffic threshold.

2. The access point of claim 1, wherein the controller is configured to switch the operation of the radio assembly from the first operating mode to the second operating mode in the event that the monitored wireless network traffic decreases below a first traffic threshold.

3. The access point of claim 1 or 2, wherein the controller is configured to switch the operation of the radio assembly from the second operating mode to the first operating mode in the event that the monitored wireless network traffic increases above a second traffic threshold.

4. The access point of claim 3 as dependent from claim 2, wherein the second traffic threshold is greater than the first traffic threshold.

5. The access point of any one of claims 1 to 4, wherein operating in the second frequency band consumes more power than operating in the first frequency band.

6. The access point of any one of claims 1 to 5, wherein the multi-band radio assembly is further configured to operate in a third frequency band,
wherein when the radio assembly is operated in the first operating mode, the radio assembly is configured to operate in the first frequency band, the second frequency band and the third frequency band, and
wherein when the radio assembly is operated in the second operating mode, the radio assembly is configured to operate in the first frequency band and to disable operation of the radio assembly in the second frequency band and the third frequency band.

7. The access point of any one of claims 1 to 6, wherein the controller is further configured to monitor the identity of devices which are wirelessly connected to the access point and to switch the operation of the radio assembly from the second operating mode to the first operating mode in the event that a device in a stored priority list of devices wirelessly connects to the access point.

8. The access point of any one of claims 1 to 7, wherein the controller is further configured to monitor movement of devices which are wirelessly connected to the access point and to switch the operation of the radio assembly from the second operating mode to the first operating mode in the event that movement of at least one device wirelessly connected to the access point is detected.

9. The access point of any one of claims 1 to 8, wherein the access point is a first access point of a plurality of access points in the wireless local area network,
wherein each of the plurality of access points comprises a multi-band radio assembly configured to operate in the first frequency band and the second frequency band, and
wherein each of the radio assemblies of the plurality of access points can be operated in a first operating mode in which a radio assembly is configured to operate in both the first frequency band and the second frequency band and a second operating mode in which the radio assembly is configured to operate in the first frequency band and to disable operation of the radio assembly in the second frequency band.

10. The access point of claim 9, wherein the controller is configured to switch the operation of a radio assembly of at least another access point of the plurality of access points, between the first operating mode and the second operating mode in the event that the monitored wireless network traffic transmitted and received by the first access point crosses a traffic threshold.

11. A network system comprising a plurality of access points for a wireless local area network, wherein the each of the access points of the plurality of access points are configured to provide wireless access points for connection to the same wireless local area network, and wherein each access point of the plurality of access points comprises:
a multi-band radio assembly configured to operate in a first frequency band and a second frequency band; and
a controller configured to switch operation of the radio assembly between a first operating mode and a second operating mode,
wherein when the radio assembly is operated in the first operating mode, the radio assembly is configured to operate in both the first frequency band and the second frequency band,
wherein when the radio assembly is operated in the second operating mode, the radio assembly is configured to operate in the first frequency band and to disable operation of the radio assembly in the second frequency band, and
wherein the controller is configured to monitor wireless network traffic transmitted and received by the access point and to switch the operation of the radio assembly between the first operating mode and the second operating mode in the event that the monitored wireless network traffic crosses a traffic threshold.

12. A controller for an access point for a wireless local area network, wherein the access point comprises a multi-band radio assembly configured to operate in a first frequency band and a second frequency band,
wherein the controller is configured to switch operation of the radio assembly between a first operating mode and a second operating mode,
wherein when the radio assembly is operated in the first operating mode, the radio assembly is configured to operate in both the first frequency band and the second frequency band,
wherein when the radio assembly is operated in the second operating mode, the radio assembly is configured to operate in the first frequency band and to disable operation of the radio assembly in the second frequency band, and
wherein the controller is configured to monitor wireless network traffic transmitted and received by the access point and to switch the operation of the radio assembly between the first operating mode and the second operating mode in the event that the monitored wireless network traffic crosses a traffic threshold.

13. A method of operating an access point for a wireless local area network, wherein the access point comprises a multi-band radio assembly configured to operate in a first frequency band and a second frequency band and wherein the method comprises:
monitoring wireless network traffic transmitted and received by the access point; and
switching operation of the radio assembly between a first operating mode and a second operating mode in the event that the monitored wireless network traffic crosses a traffic threshold,
wherein when the radio assembly is operated in the first operating mode, the radio assembly is configured to operate in both the first frequency band and the second frequency band, and
wherein when the radio assembly is operated in the second operating mode, the radio assembly is configured to operate in the first frequency band and to disable operation of the radio assembly in the second frequency band.

14. Computing apparatus comprising:
one or more processors; and
memory comprising instructions which when executed by one or more of the processors cause the computing apparatus to be operable to perform a method according to claim 13.

15. A computer readable medium carrying instructions which when executed by one or more processors of a computing apparatus, cause the computing apparatus to be operable to carry out a method according to claim 13.
